# EUROPEAN PATENT APPLICATION

(11) **EP 4 261 252 A1**
(43) Date of publication of application: **18.10.2023**
(21) Application number: 21902997.2
(22) Date of filing: 12.10.2021
(51) Int. Cl.: C08L 23/16, B60C 1/00, B62D 55/26, B65G 15/34, C08K 5/09, C08K 5/529, C08K 5/55, F16L 11/08

(54) **RUBBER COMPOSITION, RUBBER/METAL COMPOSITE, HOSE, CONVEYOR BELT, RUBBER CRAWLER, AND TIRE**

(30) Priority: 09.12.2020 JP 2020204548
(71) Applicant: BRIDGESTONE CORPORATION, Chuo-ku Tokyo 104-8340 (JP)
(72) Inventor: HIGA Tomoki, Tokyo 104-8340 (JP)
(74) Representative: Marks & Clerk LLP
(86) International application number: PCT/JP2021/037785
(87) International publication number: WO 2022/123893

(57) **Abstract**

The present disclosure aims at providing an EPDM-containing rubber composition capable of exhibiting excellent adhesion to a metal member without necessitating inclusion of a cobalt salt of organic acid therein. Specifically, a rubber composition includes therein: a rubber component containing ≥ 20 phr of EPDM; a rubber-metal adhesion promoter; a vulcanization accelerator other than a thiuram-based compound; and no thiuram-based vulcanization accelerator, wherein the rubber-metal adhesion promoter contains a specifically formulated metal salt of aliphatic carboxylic acid.

## Description

### TECHNICAL FIELD

The present invention relates to a rubber composition, a rubber-metal composite, a hose, a conveyor belt, a rubber track, and a tire.

### BACKGROUND ART

A rubber-metal composite formed by coating a reinforcing material such as a brass-plated steel cord, with a rubber composition including natural rubber, synthetic rubber, and the like, has been conventionally employed for improving performances of a rubber article such as a hose, a conveyor belt, a rubber track, and a tire. Further, it is known in this regard to include an adhesion promoter in the rubber composition so that adhesion force between the reinforcing material and the coating rubber (the rubber composition) is enhanced. Cobalt salts of organic acids (such as cobalt stearate, cobalt versatate, cobalt naphthenate, and the like) are generally used as the adhesion promoters because they are capable of enhancing adhesion between a metal member like a steel cord and a coating rubber.

In recent years, however, environmental regulations such as the REACH Regulation ("Regulation concerning the Registration, Evaluation, Authorization and Restriction of Chemicals") of EU are increasingly strengthened, whereby the cobalt salts of organic acids used as adhesion promoters as described above are now listed up as candidates of chemicals to be regulated by the REACH Regulation. Accordingly, there is a demand for developing a cobalt-free adhesion promoter.

In view of this, PTL 1, for example, discloses a technique for i) a cobalt-free adhesion promoter capable of achieving high adhesion force between rubber and metal and ii) a rubber composition and a tire each containing the adhesion promoter.

By the way, a rubber portion of a rubber article such as a hose, a conveyor belt, a rubber track, and a tire is sometimes required to be excellent in weatherproofness, as well, in terms of durability and/or appearance. To meet the request, it is known to use a rubber composition containing ethylene-propylene-diene rubber (EPDM) as a rubber component in the rubber portion of the rubber article so that weatherproofness thereof improves.

### CITATION LIST

### Patent Literature

PTL 1: WO 2016/039375 A1

### SUMMARY OF THE INVENTION

### (Technical Problem)

However, the inventor of the present disclosure revealed by a keen study that, when the adhesion promoter disclosed in PTL 1 is added, in place of a cobalt salt of organic acid, to a rubber composition containing ethylene-propylene-diene rubber (EPDM) as a rubber component, the resulting rubber composition fails to exhibit satisfactory adhesion to a metal member.

In view of this, an object of the present disclosure is to solve the prior art problems described above and provide a rubber composition containing ethylene-propylene-diene rubber (EPDM) and capable of exhibiting excellent adhesion to a metal member without necessitating inclusion of a cobalt salt of organic acid therein.
Further, another object of the present disclosure is to provide i) a rubber-metal composite using the rubber composition and being excellent in adhesion between rubber and a metal member, and ii) a hose, a conveyor belt, a rubber track, and a tire each of which uses the rubber-metal composite and is excellent in durability.

### (Solution to Problem)

The primary features of the present disclosure for achieving the aforementioned objects are as follows.

A rubber composition of the present disclosure (which is not a rubber composition containing a thiuram-based vulcanization accelerator) comprises: a rubber component; a rubber-metal adhesion promoter; and a vulcanization accelerator other than a thiuram-based compound, wherein the rubber component contains 20 parts by mass or more of ethylene-propylene-diene rubber (EPDM) with respect to 100 parts by mass of the rubber component, the rubber-metal adhesion promoter contains at least one selected from the group consisting of: (1) a metal salt of aliphatic carboxylic acid; and (2) a compound represented by general formula (A): [(RCOO)ₓMO]₃Z, the aliphatic carboxylic acid for use in (1) the metal salt of aliphatic carboxylic acid has 2 to 25 carbon atoms, a metal for use in (1) the metal salt of aliphatic carboxylic acid is any of bismuth, zinc, copper, antimony, silver, niobium, and zirconium, and in the general formula (A), each "(RCOO)" represents a residue of C₂-C₂₅ aliphatic carboxylic acid, "M" represents bismuth, zinc, copper, antimony, silver, niobium, or zirconium, "x" represents an integer ≥ 1 and equal to {(valence of M) - 1}, and "Z" represents a structure selected from formulae (z-1), (z-2), (z-3) and (z-4) shown below.

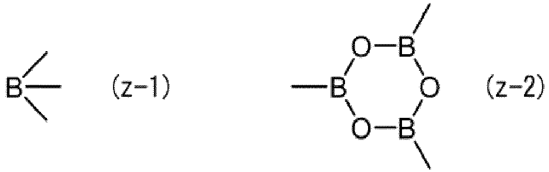

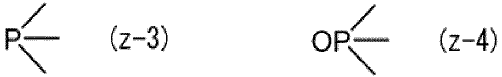

A rubber-metal composite of the present disclosure is characterized in that it includes the rubber composition described above and a metal member therein.

A hose of the present disclosure is characterized in that it has the rubber-metal composite described above.

A conveyor belt of the present disclosure is characterized in that it has the rubber-metal composite described above.

A rubber track of the present disclosure is characterized in that it has the rubber-metal composite described above.

A tire of the present disclosure is characterized in that it has the rubber-metal composite described above.

### (Advantageous Effect)

According to the present disclosure, it is possible to provide a rubber composition containing ethylene-propylene-diene rubber (EPDM) and capable of exhibiting excellent adhesion to a metal member without necessitating inclusion of a cobalt salt of organic acid therein.
Further, according to the present disclosure, it is possible to provide i) a rubber-metal composite being excellent in adhesion between rubber and a metal member and ii) a hose, a conveyor belt, a rubber track, and a tire each of which is excellent in durability.

### DETAILED DESCRIPTION

Hereinafter, a rubber composition, a rubber-metal composite, a hose, a conveyor belt, a rubber track, and a tire of the present disclosure will be demonstratively described in detail based on embodiments thereof.

### < Rubber composition >

The rubber composition of the present disclosure comprises: a rubber component; a rubber-metal adhesion promoter; and a vulcanization accelerator other than a thiuram-based compound, wherein the rubber component contains 20 parts by mass or more of ethylene-propylene-diene rubber with respect to 100 parts by mass of the rubber component, the rubber-metal adhesion promoter contains at least one selected from the group consisting of: (1) a metal salt of aliphatic carboxylic acid; and (2) a compound represented by general formula (A): [(RCOO)ₓMO]₃Z, the aliphatic carboxylic acid for use in (1) the metal salt of aliphatic carboxylic acid has 2 to 25 carbon atoms, the metal for use in (1) a metal salt of aliphatic carboxylic acid is any of bismuth, zinc, copper, antimony, silver, niobium, and zirconium, and, in the general formula (A), each "(RCOO)" represents a residue of C₂-C₂₅ aliphatic carboxylic acid, "M" represents bismuth, zinc, copper, antimony, silver, niobium, or zirconium, "x" represents an integer ≥ 1 and equal to {(valence of M) - 1}, and "Z" represents a structure selected from formulae (z-1), (z-2), (z-3) and (z-4) shown below.

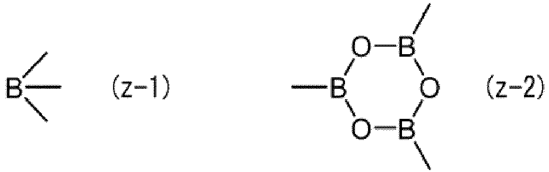

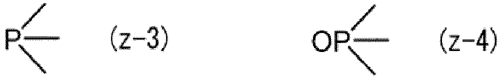

It should be noted that a rubber composition containing a thiuram-based vulcanization accelerator is excluded from the rubber composition of the present disclosure.

The rubber composition of the present disclosure contains 20 parts by mass or more of ethylene-propylene-diene rubber with respect to 100 parts by mass of the rubber component in terms of obtaining satisfactory weatherproofness.
Further, in the rubber composition of the present disclosure, the rubber-metal adhesion promoter containing at least one selected from the group consisting of (1) a metal salt of aliphatic carboxylic acid; and (2) a compound represented by the general formula (A) contributes to improving adhesion of the rubber composition to a metal member. However, in this regard, simply including the rubber-metal adhesion promoter in the rubber composition cannot achieve satisfactory adhesion of the rubber composition to a metal member when a rubber composition contains ethylene-propylene-diene rubber as in the present disclosure, as described above.
To address the problem, the rubber composition of the present disclosure contains a vulcanization accelerator other than a thiuram-based compound in addition to the rubber-metal adhesion promoter, so that the rubber composition can reliably enhance adhesion of the rubber composition to a metal member in a satisfactory manner due to a synergetic effect caused by the rubber-metal adhesion promoter and the vulcanization accelerator other than a thiuram-based compound.
Accordingly, the rubber composition of the present disclosure can achieve excellent adhesion thereof to a metal member without necessitating inclusion of a cobalt salt of organic acid therein.
In this respect, a rubber composition containing a thiuram-based vulcanization accelerator is excluded from the rubber composition of the present disclosure because presence of a thiuram-based vulcanization accelerator in the rubber composition deteriorates adhesion of the rubber composition to a metal member in a case where the rubber composition contains ethylene-propylene-diene rubber even if the rubber composition then contains the rubber-metal adhesion promoter and the vulcanization accelerator other than a thiuram-based compound.

### (Rubber component)

The rubber composition of the present disclosure contains a rubber component. The rubber component contains 20 parts by mass or more of ethylene-propylene-diene rubber (EPDM) with respect to 100 parts by mass of the rubber component. Weatherproofness of the rubber composition improves when the rubber component contains 20 parts by mass or more of ethylene-propylene-diene rubber with respect to 100 parts by mass of the rubber component.

The ethylene-propylene-diene rubber (EPDM) includes an ethylene unit, a propylene unit, and a diene unit therein. Type of the diene unit is not particularly restricted. Examples of monomer constituting the diene unit include ethylidene norbornene (ENB), vinyl norbornene (VNB), dicyclopentadiene (DCPD), 1,4-hexadiene (1,4-HD), and the like.
Any known EPDMs may be optionally selected and used as the EPDM. For example, EPDM manufactured by emulsion/solution polymerization is commercially available for use as the EPDM. A terminal end of a polymer chain of the EPDM may be either modified or unmodified.
Either a single type or combination of two or more types of those examples may be used as the EPDM.

A content of the EPDM is to be ≥ 20 parts by mass and preferably ≥ 30 parts by mass with respect to 100 parts by mass of the rubber component. The content of EPDM may be 100 parts by mass with respect to 100 parts by mass of the rubber component (i.e., the rubber component may be entirely composed of EPDM). Weatherproofness of the rubber composition fails to improve satisfactorily when a content of the EPDM is less than 20 parts by mass with respect to 100 parts by mass of the rubber component. In contrast, weatherproofness of the rubber composition more satisfactorily improves than otherwise when a content of the EPDM is ≥ 30 parts by mass with respect to 100 parts by mass of the rubber component.

The rubber component may either be entirely composed of EPDM or contain a rubber component other than EPDM. Examples of the applicable rubber component other than EPDM include natural rubber (NR), isoprene rubber (IR), butadiene rubber (BR), styrene-butadiene rubber (SBR), styrene-isoprene rubber (SIR), styrene-isoprene-butadiene rubber (SIBR), acrylonitrile-butadiene rubber (NBR), chloroprene rubber (CR), butyl rubber (IIR), and modified rubbers obtainable therefrom. Either a single type or combination of two or more types of those examples may be used as the rubber component other than the EPDM.

The rubber component of the rubber composition according to the present disclosure is preferably a combination of ethylene-propylene-diene rubber (EPDM) and at least one selected from the group consisting of natural rubber (NR), acrylonitrile-butadiene rubber (NBR), and butadiene rubber (BR). Natural rubber, in which strain-induced crystallization easily occurs, is excellent in fracture resistance (tensile properties). Acrylonitrile-butadiene rubber is excellent in oil resistance. Butadiene rubber is excellent in wear resistance. Accordingly, durability of the rubber composition improves when the rubber component includes, in addition to EPDM, at least one selected from the group consisting of NR, NBR, and BR.
The total content of NR, NBR, and BR is to be ≤ 80 parts by mass and preferably ≥ 10 parts by mass and more preferably ≥ 20 parts by mass with respect to 100 parts by mass of the rubber component in terms of durability of the rubber composition.

### (Rubber-metal adhesion promoter)

The rubber composition of the present disclosure contains a rubber-metal adhesion promoter. The rubber-metal adhesion promoter contains at least one selected from the group consisting of: (1) a metal salt of aliphatic carboxylic acid; and (2) a compound represented by general formula (A): [(RCOO)ₓMO]₃Z. Inclusion of(1) the metal salt of aliphatic carboxylic acid and/or (2) the compound represented by general formula (A) as the rubber-metal adhesion promoter in the rubber composition improves adhesion of the rubber composition to a metal member.

### - - (1) Metal salt of aliphatic carboxylic acid - -

The aliphatic carboxylic acid for use in (1) the metal salt of aliphatic carboxylic acid is a C₂₋₂₅ aliphatic carboxylic acid. Further, the metal species of(1) the metal salt is selected from the group consisting of bismuth (Bi), zinc (Zn), copper (Cu), antimony (Sb), silver (Ag), niobium (Nb), and zirconium (Zr).

Use of a C_{≥2} aliphatic carboxylic acid as the aliphatic carboxylic acid improves compatibility of(1) the metal salt of aliphatic carboxylic acid with the rubber component, thereby enhancing adhesiveness between a metal member and the rubber composition. Use of a C_{≤25} aliphatic carboxylic acid as the aliphatic carboxylic acid makes synthesis of(1) the metal salt of aliphatic carboxylic acid easy. It should be noted that the number of carbon atoms of the aliphatic carboxylic acid includes the number of carbon atoms of the carboxyl group therein in the present disclosure.

The metal for use in (1) the metal salt of aliphatic carboxylic acid is preferably bismuth. Adhesion between the rubber composition and a metal member further improves in a case where the rubber composition contains a bismuth salt of aliphatic carboxylic acid.

The aliphatic carboxylic acid for use in (1) the metal salt of aliphatic carboxylic acid is preferably an aliphatic monocarboxylic acid or an aliphatic dicarboxylic acid. Adhesion between the rubber composition and a metal member further improves in a case where the rubber composition contains a metal salt of aliphatic monocarboxylic acid/aliphatic dicarboxylic acid.

Examples of the aliphatic monocarboxylic acid include a saturated aliphatic monocarboxylic acid, an unsaturated aliphatic monocarboxylic acid, and the like. Examples of the saturated aliphatic monocarboxylic acid include ethanoic acid, propanoic acid, butanoic acid, pentanoic acid, hexanoic acid, 2-ethylhexanoic acid, heptanoic acid, octanoic acid, nonanoic acid, isononanoic acid, decanoic acid, neodecanoic acid, dodecanoic acid, tetradecanoic acid, hexadecanoic acid, heptadecanoic acid, octadecanoic acid, eicosanoic acid, docosanoic aid, tetracosanoic acid, naphthenic acid, and the like.
Examples of the unsaturated aliphatic monocarboxylic acid include 9-hexadecenoic acid, cis-9-octadecenoic acid, 11-octadecenoic acid, cis,cis-9,12-octadecadienoic acid, 9,12,15-octadecatrienoic acid, 6,9,12-octadecatrienoic acid, 9,11,13-octadecatrienoic acid, eicosanoic acid, 8,11-eicosadienoic acid, 5,8,11-eicosatrienoic acid, 5,8,11,14-eicosatetraenoic acid, tung oil fatty acid, linseed oil fatty acid, soybean oil fatty acid, tall oil fatty acid, resin acid, rosin acid, abietic acid, neoabietic acid, palustric acid, pimaric acid, dehydroabietic acid, and the like.

Examples of the aliphatic dicarboxylic acid include a saturated aliphatic dicarboxylic acid, an unsaturated aliphatic dicarboxylic acid, and the like. Examples of the saturated aliphatic dicarboxylic acid include oxalic acid, malonic acid, succinic acid, glutaric acid, adipic acid, and the like. Examples of the unsaturated aliphatic dicarboxylic acid include fumaric acid, maleic acid, and the like.

Among the aforementioned examples of the aliphatic carboxylic acid, a saturated aliphatic monocarboxylic acid is preferable because the saturated aliphatic monocarboxylic acid is less likely to affect sulfur crosslinking of a rubber component and thus makes it possible to obtain a cured rubber having rubber properties which have been less adversely affected and suitable for use in a conveyor belt, a hose, a rubber track, a tire, and the like, than otherwise. A C₂₋₂₀ saturated aliphatic monocarboxylic acid is preferable; 2-ethylhexanoic acid, neodecanoic acid, hexadecanoic acid and octadecanoic acid are more preferable; and 2-ethylhexanoic acid is particularly preferable among the examples of the saturated aliphatic monocarboxylic acid. Adhesion between the rubber composition and a metal member further improves in a case where the aliphatic carboxylic acid for use in (1) the metal salt of aliphatic carboxylic acid is a C₂₋₂₀ saturated aliphatic monocarboxylic acid.
In this respect, adhesion between the rubber composition and a metal member even further improves in a case where the saturated aliphatic monocarboxylic acid is 2-ethylhexanoic acid, neodecanoic acid, hexadecanoic acid, or octadecanoic acid.

Examples of (1) the metal salt of aliphatic carboxylic acid include bismuth 2-ethylhexanoate, zinc 2-ethylhexanoate, copper 2-ethylhexanoate, antimony 2-ethylhexanoate, silver 2-ethylhexanoate, niobium 2-ethylhexanoate, zirconium 2-ethylhexanoate, bismuth neodecanoate, zinc neodecanoate, copper neodecanoate, antimony neodecanoate, silver neodecanoate, niobium neodecanoate, zirconium neodecanoate, bismuth hexadecanoate, zinc hexadecanoate, copper hexadecanoate, antimony hexadecanoate, silver hexadecanoate, niobium hexadecanoate, zirconium hexadecanoate, bismuth octadecanoate, zinc octadecanoate, copper octadecanoate, antimony octadecanoate, silver octadecanoate, niobium octadecanoate, zirconium octadecanoate, and the like. Among those examples, bismuth 2-ethylhexanoate, bismuth neodecanoate, bismuth hexadecanoate, and bismuth octadecenoate are preferable. Either a single type or combination of two or more types of those examples may be used as (1) the metal salt of aliphatic carboxylic acid.

The aforementioned (1) metal salt of aliphatic carboxylic acid can be obtained, for example, as described in WO 2016/039375, by either (i) "Fusion process", which is a method of manufacturing a metal salt of aliphatic carboxylic acid by causing a C₂₋₂₅ aliphatic carboxylic acid (a) to directly react with at least one selected from the group consisting of: (b-1) an oxide of metal (bismuth, zinc, copper, antimony, silver, niobium, or zirconium,); (b-2) a hydroxide of metal (bismuth, zinc, copper, antimony, silver, niobium, or zirconium); and (b-3) a carbonate of metal (bismuth, zinc, copper, antimony, silver, niobium, or zirconium), or (ii) "Double decomposition process", which is a method of manufacturing a metal salt of aliphatic carboxylic acid by first causing the C₂₋₂₅ aliphatic carboxylic acid (a) to react with NaOH under the presence of water, to obtain a sodium salt of aliphatic carboxylic acid, and then causing the sodium salt of aliphatic carboxylic acid thus obtained, to react with at least one selected from the group consisting of (c-1) a sulfate of metal (bismuth, zinc, copper, antimony, silver, niobium, or zirconium); (c-2) a chloride of metal (bismuth, zinc, copper, antimony, silver, niobium, or zirconium); and (c-3) a nitrate of metal (bismuth, zinc, copper, antimony, silver, niobium, or zirconium).

### - - Compound (2) - -

The compound (2) is represented by the general formula (A): [(RCOO)ₓMO]₃Z.

"(RCOO)" in the general formula (A) represents a residue of C₂₋₂₅ aliphatic carboxylic acid. A residue of C_{≥2} aliphatic carboxylic acid improves compatibility of the compound (2) with a rubber component, thereby enhancing adhesiveness between a metal member and the rubber composition. A residue of C_{≤25} aliphatic carboxylic acid not only allows easy synthesis of the compound (2) but also improves dispersion properties of the compound (2) in a rubber component and/or adsorption properties of the compound (2) on a surface of a metal member, thereby increasing an effect of enhancing adhesiveness between a metal member and the rubber composition. In the present disclosure, the number of carbon atoms of (RCOO) represents the number of carbon atoms including that (those) of carboxyl group(s).

A residue of aliphatic monocarboxylic acid is preferable as the residue of C₂₋₂₅ aliphatic carboxylic acid. Preferable examples of the residue of aliphatic monocarboxylic acid include residues derived from the aliphatic monocarboxylic acid examples described above.

Among the residues of aliphatic carboxylic acids, a residue of saturated aliphatic monocarboxylic acid is preferable because the compound (2) having the specific residue does not involve itself in crosslinking of a rubber component, thereby facilitating dispersion/adsorption of the compound (2) to the vicinity of the metal/on a surface of the metal and thus more explicitly causing an effect of promoting adhesion of a metal member and the rubber composition than otherwise. Among the residues of saturated aliphatic monocarboxylic acids, a residue of C₂₋₂₀ saturated aliphatic monocarboxylic acid is preferable and a residue of 2-ethylhexanoic acid, a residue of neodecanoic acid, a residue of hexadecanoic acid and a residue of octadecanoic acid are more preferable.
Adhesion between the rubber composition and a metal member further improves in a case where (RCOO) in the general formula (A) is a residue of C₂₋₂₀ saturated aliphatic monocarboxylic acid. Adhesion between the rubber composition and a metal member even further improves in a case where the saturated aliphatic monocarboxylic acid in connection with (RCOO) is 2-ethylhexanoic acid, neodecanoic acid, hexadecanoic acid, or octadecanoic acid.

"M" in the general formula (A) represents a metal species and specific examples thereof include bismuth (Bi), zinc (Zn), copper (Cu), antimony (Sb), silver (Ag), niobium (Nb), and zirconium (Zr). Among those examples of the metal species, bismuth is particularly preferable as M because bismuth ensures satisfactory adhesion between a metal member and the rubber composition.

Further, "x" in the general formula (A) represents an integer which is ≥ 1 and equal to {(valence of M) - 1}.

Yet further, "Z" in the general formula (A) represents a structure selected from formulae (z-1), (z-2), (z-3) and (z-4) shown below. 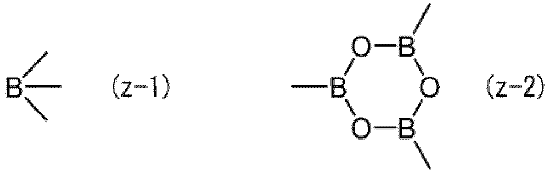 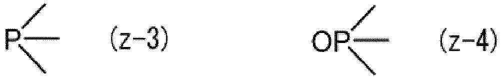 The structure represented by the formula (z - 1) is preferable among the structures shown above because the (z - 1) structure further enhances adhesion force (adhesiveness) between a metal member and the rubber composition.

Examples of the compound (2) include tris[(bismuth 2-ethylhexanoate)oxy] boron, tris[(zinc 2-ethylhexanoate)oxy] boron, tris[(copper 2-ethylhexanoate)oxy] boron, tris[(antimony 2-ethylhexanoate)oxy] boron, tris[(silver 2-ethylhexanoate)oxy] boron, tris[(niobium 2-ethylhexanoate)oxy] boron, tris[(zirconium 2-ethylhexanoate)oxy] boron, tris[(bismuth neodecanoate)oxy] boron, tris[(zinc neodecanoate)oxy] boron, tris[(copper neodecanoate)oxy] boron, tris[(antimony neodecanoate)oxy] boron, tris[(silver neodecanoate)oxy] boron, tris[(niobium neodecanoate)oxy] boron, tris[(zirconium neodecanoate)oxy] boron, tris[(bismuth hexadecanoate)oxy] boron, tris[(zinc hexadecanoate)oxy] boron, tris[(copper hexadecanoate)oxy] boron, tris[(antimony hexadecanoate)oxy] boron, tris[(silver hexadecanoate)oxy] boron, tris[(niobium hexadecanoate)oxy] boron, tris[(zirconium hexadecanoate)oxy] boron, tris[(bismuth octadecenoate)oxy] boron, tris[(zinc octadecenoate)oxy] boron, tris[(copper octadecenoate)oxy] boron, tris[(antimony octadecenoate)oxy] boron, tris[(silver octadecenoate)oxy] boron, tris[(niobium octadecenoate)oxy] boron, tris[(zirconium octadecenoate)oxy] boron, and the like. Among those examples, tris[(bismuth 2-ethylhexanoate)oxy] boron, tris[(bismuth neodecanoate)oxy] boron, tris[(bismuth hexadecanoate)oxy] boron, tris[(bismuth octadecenoate)oxy] boron are preferable. Either a single type or combination of two or more types of those examples may be used as the compound (2).

The compound (2) represented by the general formula (A) can be prepared, for example, by a method as disclosed in WO 2016/039375, of (i) mixing and heating: (a) a C₂₋₂₅ aliphatic carboxylic acid; any of (d-1) a boric acid ester of a C₁₋₅ lower alcohol, (d-2) a metaboric acid ester of a C₁₋₅ lower alcohol, (d-3) a phosphoric acid ester of a C₁₋₅ lower alcohol, and (d-4) a phosphite ester of a C₁₋₅ lower alcohol; (e) an acid capable of forming a volatile ester with a C₁₋₅ lower alcohol residue present in the (d-1) - (d-4) esters; and (f) a metal compound M as a metal source, and (ii) removing a resulting volatile ester.

A content of the rubber-metal adhesion promoter, which is not particularly restricted, is preferably ≥ 0.1 parts by mass, more preferably ≥ 0.5 parts by mass, and particularly preferably ≥ 1.0 parts by mass with respect to 100 parts by mass of the rubber component in terms of obtaining even better adhesion to a metal member than otherwise. On the other hand, a content of the rubber-metal adhesion promoter is preferably ≤ 20 parts by mass, more preferably ≤ 15 parts by mass, and particularly preferably ≤ 10 parts by mass with respect to 100 parts by mass of the rubber component in terms of suppressing deterioration of the rubber composition.
Further, a content of the rubber-metal adhesion promoter, in terms of the metal element therein, is preferably ≥ 0.01 parts by mass, more preferably ≥ 0.1 parts by mass, and preferably ≤ 5 parts by mass, more preferably ≤ 3 parts by mass, with respect to 100 parts by mass of the rubber component. In a case where a content of the rubber-metal adhesion promoter, in terms of the metal element therein, is ≥ 0.01 parts by mass, adhesion between the rubber composition and metal member further improves. In a case where a content of the rubber-metal adhesion promoter, in terms of the metal element therein, is ≤ 5 parts by mass, the rubber-metal adhesion promoter causes a relatively little effect on the crosslinking reaction of the rubber component, thereby causing a relatively little degrading effect on the rubber composition.
The total content of (1) the metal salt of aliphatic carboxylic acid and the compound (2) represented by the general formula (A) in the rubber-metal adhesion promoter is preferably ≥ 50 mass %, more preferably ≥ 80 mass %, and may be 100 mass %. Unreacted residual raw materials (such as "(a) a C₂₋₂₅ aliphatic carboxylic acid" described above) used for the synthesis of(1) the metal salt of aliphatic carboxylic acid and the compound (2) represented by the general formula (A) may remain in the rubber-metal adhesion promoter.

### (Vulcanization accelerator other than thiuram-based compound)

The rubber composition of the present disclosure contains a vulcanization accelerator other than a thiuram-based compound. Inclusion of a vulcanization accelerator other than a thiuram-based compound in the rubber composition improves adhesion of the rubber composition to a metal member.

It should be noted in this respect that a rubber composition containing a thiuram-based vulcanization accelerator is excluded from the rubber composition of the present disclosure because presence of the thiuram-based vulcanization accelerator in a rubber composition (cancels out the advantage and thus) deteriorates adhesion of the rubber composition to a metal member.

Examples of the vulcanization accelerator other than a thiuram-based compound include a sulfenamide-based vulcanization accelerator, a thiazole-based vulcanization accelerator, a guanidine-based vulcanization accelerator, and the like.
In the rubber composition of the present disclosure, the vulcanization accelerator other than a thiuram-based compound is preferably at least one selected from the group consisting of a sulfenamide-based vulcanization accelerator and a thiazole-based vulcanization accelerator. Inclusion of a sulfenamide-based vulcanization accelerator and/or a thiazole-based vulcanization accelerator in the rubber composition further improves adhesion of the rubber composition to a metal member.
Examples of the sulfenamide-based vulcanization accelerator include N-cyclohexyl-2-benzothiazolesulfenamide (CZ, CBS), N-tert-butyl-2-benzothiazolesulfenamide (NS, BBS), N-oxydiethylene-2-benzothiazolesulfenamide (OBS), N,N-diisopropyl-2-benzothiazolesulfenamide (DPBS), N,N-dicyclohexyl-2-benzothiazolesulfenamide (DZ, DCBS), and the like.
Examples of the thiazole-based vulcanization accelerator include 2-mercaptobenzothiazole (MBT), and the like.
Either a single type or combination of two or more types of those examples may be used as the vulcanization accelerator other than a thiuram-based compound.

A content of the vulcanization accelerator other than a thiuram-based compound is preferably ≥ 0.01 parts by mass, more preferably ≥ 0.1 parts by mass, even more preferably ≥ 0.2 parts by mass, particularly preferably ≥ 0.3 parts by mass, and preferably ≤ 10 parts by mass, more preferably ≤ 5 parts by mass, even more preferably ≤ 3 parts by mass, particularly preferably ≤ 1 parts by mass, with respect to 100 parts by mass of the rubber component.

### (Other components)

Known additives generally blended with a rubber composition may optionally be added, in addition to the rubber component, the rubber-metal adhesion promoter, and the vulcanization accelerator other than a thiuram-based compound described above, to the rubber composition of the present disclosure. Examples of the additives include filler, vulcanizing agent (crosslinking agent), vulcanization aid, oil, vulcanization retarder, aging prevention agent, reinforcing agent, coloring agent, flame retardant, lubricant, foaming agent, plasticizer, processing aid, antioxidant, scorch inhibitor, UV protection agent, antistatic agent, coloring inhibitor, and the like. Either a single type or combination of two or more types of those examples may be used as the additive.

Examples of the filler include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, barium sulfate, and the like. Carbon black and silica are preferable and carbon black is particularly preferable as the filler among these examples in terms of satisfactorily reinforcing the rubber composition.
Type of the carbon black is not particularly restricted. Any hard carbon manufactured by the oil furnace method can be used, for example. Specifically, for example, at least one of GPF, FEF, SRF, HAF, ISAF, IISAF, SAF grades can be used as the carbon black, without particularly being limited thereto.
Type of the silica is not particularly restricted and examples thereof include wet silica (hydrated silica), dry silica (silica anhydrous), calcium silicate, aluminum silicate, and the like.
A content of the filler, which is not particularly restricted, is preferably ≥ 20 parts by mass, more preferably 30 parts by mass, even more preferably ≥ 40 parts by mass, particularly preferably ≥ 50 parts by mass, and preferably ≤ 200 parts by mass, more preferably ≤ 175 parts by mass, even more preferably ≤ 150 parts by mass, particularly preferably ≤ 125 parts by mass, with respect to 100 parts by mass of the rubber component. The content of the filler, of ≥ 20 parts by mass with respect to 100 parts by mass of the rubber component, further improves reinforcing properties of the rubber composition. The content of the filler, of ≤ 200 parts by mass with respect to 100 parts by mass of the rubber component, ensures good workability of the rubber composition in the mixing and kneading process.

Sulfur is preferable as the vulcanizing (crosslinking) agent. Type of the sulfur is not particularly restricted and examples thereof include sulfur powder, precipitated sulfur, colloidal sulfur, insoluble sulfur, oil-treated sulfur, and the like. A content of the vulcanizing (crosslinking) agent is preferably ≥ 0.1 parts by mass, more preferably ≥ 0.2 parts by mass, even more preferably ≥ 0.3 parts by mass, particularly preferably ≥ 0.5 parts by mass, and preferably ≤ 10 parts by mass, more preferably ≤ 8 parts by mass, even more preferably ≤ 6 parts by mass, particularly preferably ≤ 4 parts by mass, with respect to 100 parts by mass of the rubber component.

Zinc white (zinc oxide) is preferable as the vulcanization aid. A content of the vulcanization aid is preferably ≥ 1 parts by mass, more preferably ≥ 2 parts by mass, even more preferably ≥ 3 parts by mass, particularly preferably ≥ 4 parts by mass, and preferably ≤ 20 parts by mass, more preferably ≤ 17.5 parts by mass, even more preferably ≤ 15 parts by mass, particularly preferably ≤ 12.5 parts by mass, with respect to 100 parts by mass of the rubber component.

The rubber composition of the present disclosure preferably contains no cobalt added thereto, in terms of proactively addressing the relevant environmental regulations. Specifically, a content of a cobalt compound in the rubber composition is preferably <_ 0.01 parts by mass and more preferably 0 parts by mass (except for a very small amount of cobalt as the inevitable impurities) with respect to 100 parts by mass of the rubber component.

### (Method for manufacturing rubber composition)

A method for manufacturing the rubber composition of the present disclosure, which is not particularly restricted, may employ any known relevant method.

For example, the rubber composition of the present disclosure can be obtained by: blending a rubber component, a rubber-metal adhesion promoter, a vulcanization accelerator other than a thiuram-based compound, and any optional component either simultaneously or in any desired order; and mixing and kneading them by using a mixing and kneading device such as a Banbury mixer, a roll, an internal mixer, or the like.

### (Application of rubber composition)

Application of the rubber composition according to the present disclosure is not particularly restricted. The rubber composition of the present disclosure is applicable to, for example, any rubber article such as a hose, a conveyor belt, a rubber track, a tire, an electric wire, and a damping material.

### < Rubber-metal composite >

A rubber-metal composite of the present disclosure characteristically has the rubber composition of the present disclosure described above and a metal member. The rubber-metal composite of the present disclosure is excellent in adhesion between rubber (the rubber composition) and a metal member.

It suffices that the rubber composition of the present disclosure is simply in contact with a metal member in the rubber-metal composite of the present disclosure. Examples of acceptable embodiments of the rubber-metal composite include an embodiment in which at least a part of a metal wire as a metal member is coated with the rubber composition and an embodiment in which a rubber layer made of the rubber composition is laminated on at least one surface side of a layer made of a metal wire(s).

A "metal member" represents a member made from metal and may have various configurations such as a metal wire, a metal cord formed by twining a plurality of the metal wires (steel wires), a metal cord constituted of the single metal wire, a metal spring, a metal plate, a metal ring, and the like.
The metal species of the metal member, which is not particularly restricted, may be optionally selected from steel, iron, copper, gold, and the like in accordance with the application.

The metal member may be either plated or non-plated. Type of the plating is not particularly restricted and any known plating such as brass plating, zinc plating, chrome plating, nickel plating, or the like, may be optionally employed.
In this regard, the metal member is preferably provided with at least one plating selected from the group consisting of brass plating and zinc plating in a case where the metal member is a metal wire.

A method for manufacturing the rubber-metal composite of the present disclosure, which is not particularly restricted, may employ any known optional method. For example, in a case of a rubber-metal composite in which a metal wire is coated with the rubber composition, the composite can be obtained by coating the metal wire with the rubber composition and vulcanizing the rubber composition thus provided on the wire. Further, in a case of a rubber-metal composite in which a rubber layer made of the rubber composition is laminated on at least one surface side of a layer made of a metal wire(s), the composite can be obtained by, for example, the laminate-manufacturing method disclosed in WO 2017/056414 A1.

### < Hose >

A hose of the present disclosure is characterized in that it has the rubber-metal composite described above. The hose of the present disclosure has superior durability because the adhesion between rubber and metal thereof is equivalent to or better than the corresponding adhesion exhibited by a hose using a rubber composition containing a cobalt salt.

The hose of the present disclosure is not particularly limited, except that it needs to use the rubber-metal composite described above, and may optionally employ any known structures and manufacturing methods of hoses.
In one embodiment, the hose has an inner rubber layer (an inner tube rubber) located on the inner side in the radial direction thereof, an outer rubber layer located on the outer side in the radial direction thereof, and a metal reinforcing layer (a metal member) located between the inner rubber layer and the outer rubber layer. The rubber composition described above can be used for at least one of the inner rubber layer and the outer rubber layer in one embodiment. The rubber composition, containing EPDM and being excellent in weatherproofness, is suitably applicable to the outer rubber layer.

### < Conveyor belt >

A conveyer belt of the present disclosure is characterized in that it has the rubber-metal composite described above. The conveyor belt of the present disclosure has superior durability because the adhesion between rubber and metal thereof is equivalent to or better than the corresponding adhesion exhibited by a conveyor belt using a rubber composition containing a cobalt salt.

The conveyer belt of the present disclosure is not particularly limited, except that it needs to use the rubber-metal composite described above, and may optionally employ any known structures and manufacturing methods of conveyor belts.
In one embodiment, the rubber-metal composite of the present disclosure can be used at least for a surface rubber on the inner peripheral side (a lower surface cover rubber) under a metal reinforcing material (a metal member) made of steel cords or the like, of a conveyer belt, which lower surface cover rubber is brought into contact with a driving pulley, a driven pulley, a shape-keeping rotor, and the like. Further, the rubber-metal composite can also be used for a surface rubber on the outer peripheral side (an upper surface cover rubber) on the upper side of the metal reinforcing material, of the conveyor belt, which upper surface cover rubber is brought into contact with an article that is being transported.
Specific examples of a method for manufacturing the conveyor belt described above include: interposing a metal reinforcing material between rubber sheets made of the rubber composition described above; and then subjecting the rubber sheets to press-attaching under heating, thereby making the metal reinforcing material and the rubber adhere to each other and the former be coated with the latter through vulcanization bonding.

### < Rubber track >

A rubber track of the present disclosure is characterized in that it has the rubber-metal composite described above. The rubber track of the present disclosure has superior durability because the adhesion between rubber and metal thereof is equivalent to or better than the corresponding adhesion exhibited by a rubber track using a rubber composition containing a cobalt salt.

The rubber track of the present disclosure is not particularly limited, except that it needs to use the rubber-metal composite described above, and may optionally employ any known structures and manufacturing methods of rubber tracks.
In one embodiment, the rubber track has: steel cords (a metal member); an intermediate rubber layer which covers the steel cords such that the steel cords are coated with the intermediate rubber; a metal bar (a metal member) provided on the intermediate rubber layer; and a main body rubber layer in which the intermediate rubber layer and the metal bar are embedded, wherein a plurality of lugs are formed on the ground contact surface side of the main body rubber layer. The rubber composition described above can be used for any portion of the rubber track.

### < Tire >

A tire of the present disclosure is characterized in that it has the rubber- metal composite described above. The tire of the present disclosure has superior durability because the adhesion between rubber and metal thereof is equivalent to or better than the corresponding adhesion exhibited by a tire using a rubber composition containing a cobalt salt.

The tire of the present disclosure is not particularly limited, except that it needs to use the rubber-metal composite described above, and may optionally employ any known structures and manufacturing methods of tires.
A tire portion, to which the rubber-metal composite of the present disclosure is applicable, is not particularly restricted and the tire portion can be appropriately selected according to necessity. Examples of such a tire portion include carcass, belt, bead core, and the like.
The conventional tire-manufacturing method can be employed as a method for manufacturing the tire of the present disclosure.
For example, a tire (e.g., a pneumatic tire) as desired can be manufactured by sequentially laminating members generally for use in tire production such as a carcass and a belt (the rubber-metal composite) made of the rubber composition in the unvulcanized state and metal cords, a tread made of the unvulcanized rubber composition, and the like on a tire building drum; removing the drum, to obtain a green tire; and subjecting the green tire to heating and vulcanization according to the conventional method.

### EXAMPLES

The present disclosure will be described further in detail by Examples hereinafter. The Examples by no means restrict the present disclosure. A content of a component represents "parts by weight" in the Examples unless otherwise stated.

### (Examples 1 to 4, Comparative Examples 1 to 6)

Each of unvulcanized rubber compositions of Examples 1 to 4 and Comparative Examples 1 to 6 was obtained by: preparing the relevant components (except for sulfur and a vulcanization accelerator) according to the blend formulation shown in Table 1; mixing and kneading the components until the temperature thereof reached 160 °C by using an internal mixer; cooling the mixture until the temperature thereof dropped to 40 °C or lower; and then adding sulfur and a vulcanization accelerator to the mixture.
(1) Preparation of samples for rubber-metal adhesion test Two test samples were obtained from each of the unvulcanized rubber compositions thus formed, by: preparing two sheets (150 mm × 150 mm, thickness: 2 mm) from the unvulcanized rubber composition by rolling; placing seven metal wires with no gaps therebetween on each of the two sheets; and subjecting the respective sheets to vulcanization at 150 °C for 60 minutes, thereby obtaining two test samples of a rubber-metal composite including the vulcanized rubber (derived from the unvulcanized rubber composition).
(2) Rubber-metal adhesion test A rubber-metal adhesion test was conducted for the two test samples of a rubber-metal composite including the vulcanized rubber described above by: pulling, for one of the samples, five metal wires other than two metal wires at both ends all together by a constant force, with a pair of pliers; measuring a coating rate (%) at which the vulcanized rubber continued to cover a surface of the metal wire thus pulled; and repeating the same test procedures for the other test sample. The results are shown in Table 1. The higher coating rate indicates the better adhesiveness between rubber and metal. In Table 1, the value on the left-hand side of the symbol "/" represents the result of the first test and the value on the right-hand side of the symbol "P' represents the result of the second test.

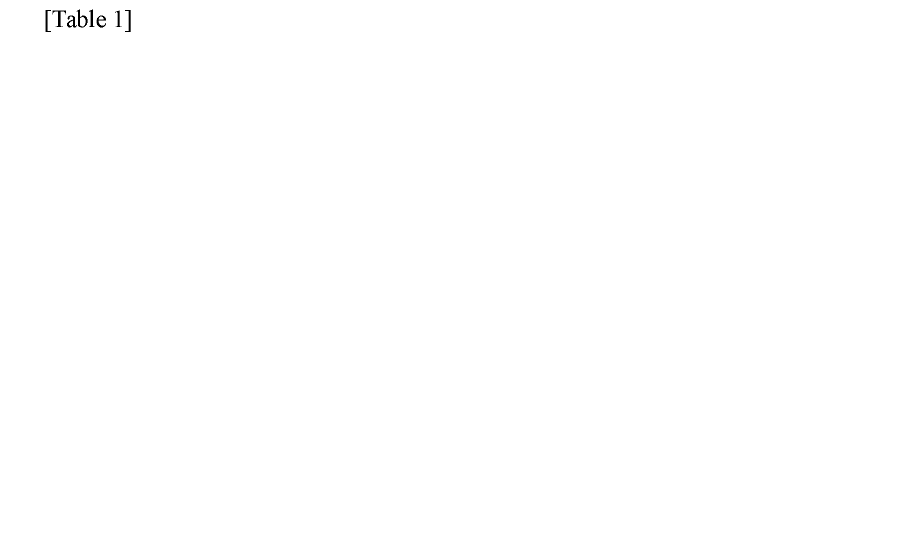

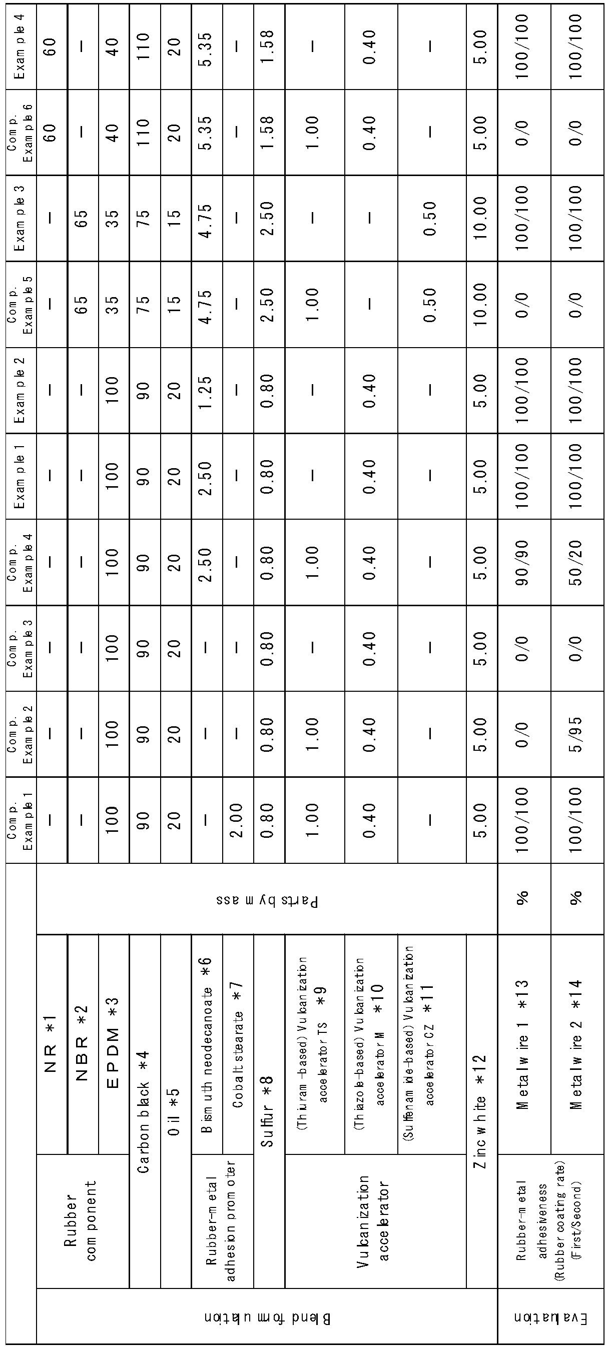

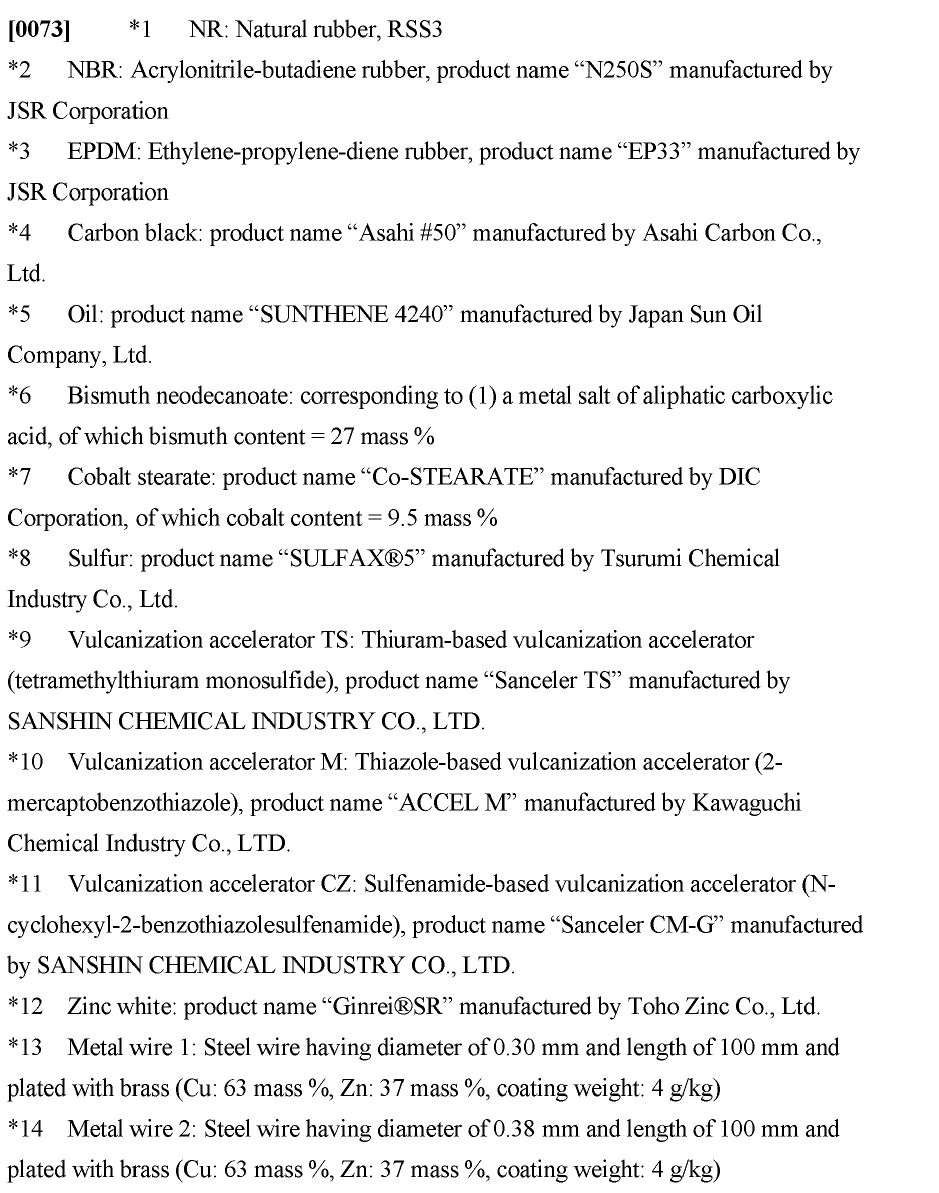

It is understood from the results of the Examples shown in Table 1 that each of the rubber compositions containing EPDM as a rubber component of the Examples significantly improves, by including a rubber-metal adhesion promoter, a vulcanization accelerator other than a thiuram-based compound, and no thiuram-based vulcanization accelerator therein, adhesion thereof to a metal member such that the rubber composition can obtain adhesion between rubber and metal equivalent to or better than the corresponding adhesion exhibited by a rubber composition (of Comparative Example 1) containing a cobalt salt of organic acid.
It is understood, in contrast, from the results of Comparative Examples 2 and 3 that the adhesion of the EPDM-containing rubber composition to a metal member significantly deteriorates when the rubber composition fails to contain a rubber-metal adhesion promoter.
Further, it is understood from the results of Comparative Examples 4 to 6 that the adhesion of the EPDM-containing rubber composition to a metal member deteriorates when the rubber composition, adequately containing a rubber-metal adhesion promoter and a vulcanization accelerator other than a thiuram-based compound, further contains a thiuram-based vulcanization accelerator therein.

### INDUSTRIAL APPLICABILITY

The rubber composition of the present disclosure is applicable to a rubber-metal composite. Further, the rubber-metal composite of the present disclosure is applicable to a hose, a conveyor belt, a rubber track, a tire, and the like.

## Claims

1. A rubber composition, comprising:
a rubber component;
a rubber-metal adhesion promoter; and
a vulcanization accelerator other than a thiuram-based compound,
wherein the rubber component contains 20 parts by mass or more of ethylene-propylene-diene rubber with respect to 100 parts by mass of the rubber component,
the rubber-metal adhesion promoter contains at least one selected from the group consisting of: (1) a metal salt of aliphatic carboxylic acid; and (2) a compound represented by general formula (A): [(RCOO)ₓMO]₃Z,
the aliphatic carboxylic acid for use in (1) the metal salt of aliphatic carboxylic acid has 2 to 25 carbon atoms,
a metal for use in (1) the metal salt of aliphatic carboxylic acid is any of bismuth, zinc, copper, antimony, silver, niobium, and zirconium,
in the general formula (A), each "(RCOO)" represents a residue of C₂-C₂₅ aliphatic carboxylic acid, "M" represents bismuth, zinc, copper, antimony, silver, niobium, or zirconium, "x" represents an integer ≥ 1 and equal to {(valence of M) - 1}, and "Z" represents a structure selected from formulae (z-1), (z-2), (z-3) and (z-4) shown below, and 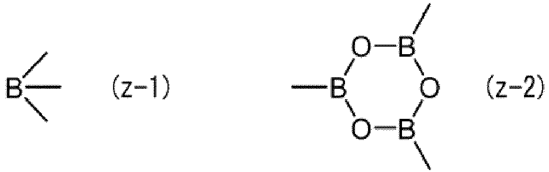 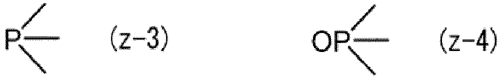
the rubber composition contains no thiuram-based vulcanization accelerator.

2. The rubber composition of claim 1, wherein the rubber component is a combination of ethylene-propylene-diene rubber and at least one selected from the group consisting of natural rubber, acrylonitrile-butadiene rubber, and butadiene rubber.

3. The rubber composition of claim 1 or 2, wherein the rubber-metal adhesion promoter contains (1) the metal salt of aliphatic carboxylic acid, and a metal for use in (1) the metal salt of aliphatic carboxylic acid is bismuth.

4. The rubber composition of any of claims 1 to 3, wherein the rubber-metal adhesion promoter contains (1) the metal salt of aliphatic carboxylic acid, and the aliphatic carboxylic acid for use in (1) the metal salt of aliphatic carboxylic acid is an aliphatic monocarboxylic acid or an aliphatic dicarboxylic acid.

5. The rubber composition of claim 4, wherein the aliphatic carboxylic acid for use in (1) the metal salt of aliphatic carboxylic acid is a C₂₋₂₀ saturated aliphatic monocarboxylic acid.

6. The rubber composition of claim 5, wherein the saturated aliphatic monocarboxylic acid is 2-ethylhexanoic acid, neodecanoic acid, hexadecanoic acid, or octadecanoic acid.

7. The rubber composition of any of claims 1 to 6, wherein the rubber-metal adhesion promoter contains the compound (2), and M in the general formula (A) is bismuth.

8. The rubber composition of any of claims 1 to 7, wherein the rubber-metal adhesion promoter contains the compound (2), and Z in the general formula (A) has a structure represented by the formulae (z-1) shown above.

9. The rubber composition of any of claims 1 to 8, wherein the rubber-metal adhesion promoter contains the compound (2), and (RCOO) in the general formula (A) is a residue of C₂₋₂₀ saturated aliphatic monocarboxylic acid.

10. The rubber composition of claim 9, wherein the saturated aliphatic monocarboxylic acid is 2-ethylhexanoic acid, neodecanoic acid, hexadecanoic acid, or octadecanoic acid.

11. The rubber composition of any of claims 1 to 10, wherein the vulcanization accelerator other than a thiuram-based compound is at least one selected from the group consisting of a sulfenamide-based vulcanization accelerator and a thiazole-based vulcanization accelerator.

12. A rubber-metal composite, including the rubber composition of any of claims 1 to 11 and a metal member therein.

13. A hose, having the rubber-metal composite of claim 12.

14. A conveyor belt, having the rubber-metal composite of claim 12.

15. A rubber track, having the rubber-metal composite of claim 12.

16. A tire, having the rubber-metal composite of claim 12.
